# EUROPEAN PATENT APPLICATION

(11) **EP 4 122 682 A1**
(43) Date of publication of application: **25.01.2023**
(21) Application number: 21186890.6
(22) Date of filing: 21.07.2021
(51) Int. Cl.: B29C 70/04, B29C 70/42, B29C 70/44, B29D 99/00

(54) **METHOD OF MANUFACTURING A COMPOSITE BOX STRUCTURE**

(71) Applicant: Airbus Operations GmbH, 21129 Hamburg (DE)
(72) Inventor: Kako, Jan-Christoph, 21129 Hamburg (DE)
(74) Representative: Schornack, Oliver

(57) **Abstract**

Described is a method of manufacturing a composite box structure (10), wherein the method comprises the steps of: preforming (200) a laminate (52 - 56) to a longitudinal component (50), wherein the laminate (52 - 56) is provided with a resin matrix; semi-curing (205) the preformed longitudinal component (50); placing (220) at least one skin element (60, 62) on the semi-cured component (50); and curing (225) the at least one skin element (60, 62) and the semi-cured component (50) to manufacture the composite box structure (10).

## Description

The invention relates to a method of manufacturing a composite box structure. Particularly, the invention relates to a method of manufacturing a composite box structure, wherein a preform having an open cross-section is semi-cured and is later cured together with at least one skin element to form the box structure.

Composite box structures, such as a multispar box used at an airfoil of an aircraft, is usually assembled from several components, which are fastened or bonded together. Fastening, such as the use of bolts and rivets, is time-consuming (drilling and providing bolts/rivets) and provides additional weight to the multispar box. Bonding, such as by using an adhesive, is not permitted for primary structural elements of an aircraft or implies additional recurrent testing and fail safe mechanisms.

The components may be made of a composite material that is cured. Alternatively, the components are all built from pre-pregs and are co-cured in a single curing step. This avoids additional fastening or bonding efforts. However, the tooling of interior parts of the box structure may become quite complex, particularly when having a closed tooling concept, and the demoulding is difficult and also time-consuming.

It is therefore an object of the invention to provide a method of manufacturing a composite box structure that is fast and easy to implement.

This object is achieved by a method with the features of claim 1.

According to a first exemplary aspect for understanding the present disclosure, a method of manufacturing a composite box structure comprises preforming a laminate to a longitudinal component, wherein the laminate is provided with a resin matrix, and semi-curing the preformed longitudinal component. Semi-curing is performed by a reduced curing cycle, for example, at a lower curing temperature than normally applied for pre-preg material. After such semi-curing the interlinking of the resin matrix is not completed. On the other hand, it provides a certain stability of the material, particularly a geometric stability, of the semi-cured longitudinal component. Thus, the semi-cured longitudinal component (also referred to as "the preform") can be employed in subsequent building processes without requiring tooling or a mould for the preform.

For example, the method further comprises placing at least one skin element on the semi-cured component, and curing the at least one skin element and the semi-cured component to manufacture the composite box structure. Since the preform can be used without individual tooling or mould, the final curing can be achieved easier and faster. Furthermore, the demoulding is significantly improved, since no internal moulds have to be removed. In cases where the box structure includes closed recesses or spaces, a demoulding is not possible, and in conventionally produced box structures, the mould remains inside the box structure. This, however, adds additional weight and the mould complexity needs to be increased with detrimental effects on process stability. All that can be omitted by using the semi-cured component.

Any laminate, preform, skin element, ply or other composite element or component described herein refers to a plastic component. For example, such plastic component can be reinforced, such as a fibre reinforced component consisting of fibres and a resin matrix. The fibres can be carbon fibres, glass fibres basalt fibres, natural fibres or the like, and the resin matrix may be any thermoset or thermoplastic material.

In addition, during the semi-curing the component is subject to a cure induced compaction and/or at least a portion of a chemical shrinkage. Thus, the pitch, track and thickness of the semi-cured component is known before further manufacturing steps take place. This allows producing structures of increased quality. For instance, if one of several semi-cured components turns out to be smaller or bigger than the others, certain tolerances can be compensated before placing the skin element, or the semi-cured component may not be used at all. A further quality increase can be achieved, since movements of the laminate before and during a conventional curing process can be omitted.

In an implementation variant, the semi-curing can achieve a degree of cure of the resin matrix between 10% and 80%, preferably between 20% and 70%, of a complete cure. In other words, the interlinking of the resin matrix is not completed, but only reaches a degree of 10% to 80%, preferably a degree of 20% to 70%. This can be achieved, for example, by applying a lower curing temperature and/or a shorter curing cycle time.

For instance, for a longitudinal spar or string component semi-curing may take place between one 1 to 3 hours at 100°C to 150°C, preferably for 2 hours at 135°C. This temperature may be applied at full pressure, i.e. the pressure normally used for conventional curing of the respective resin matrix. Conventional curing, particularly to fully cure the material, usually takes place for about 2 to 3 hours at 180°C.

In another implementation variant, preforming can comprise placing the laminate in a female tool and/or placing the laminate on a rigid mandrel and/or using an interior inflatable tool and/or using a vacuum bag and/or using a collapsible mandrel and/or using a mould at least partially made from shape memory polymer (e.g., that can be vacuumed to collapsed at the end of the curing). The preforming, hence, can be achieved in a manner very similar or identical to the conventional preparation of a composite box structure. However, since only a portion of the box structure, particularly a single longitudinal component, is manufactured in the semi-curing cycle first, the longitudinal component can be produced with a single female tool instead of a plurality of male tools. This makes tooling, producing and demoulding the component much easier. Even if a rigid mandrel (e.g., a male tooling) is used, it can be easily removed (demoulded) due to the less complex longitudinal component. Interior spaces of the component are easier to reach, so that moulding and demoulding is enhanced.

In a further implementation variant, preforming can comprise providing a filler at a bend of the laminate. Since the disclosed method allows employment of a female tooling/mould, any radii at a bend of the laminate can be supported by a respective filler. For instance, a filler may be placed in a corner of the tooling/mould to provide a curved outer mould portion for the bend of the laminate. Alternatively, the female tooling/mould may be provided with the required radius at a corner thereof.

In yet a further implementation variant, the method can further comprise arranging a plurality of semi-cured components adjacent to one another, wherein at least one of the plurality of semi-cured components contacts another one of the plurality of semi-cured components. Thus, a closed box structure can be formed by a plurality of semi-cured components, of which at least two are covered by the skin element.

In an exemplary variant, the semi-cured component may have an open cross-section providing two ends of the component in a circumferential direction. The at least one semi-cured component may contact the other semi-cured component at the two ends thereof. This allows manufacturing a closed box structure that is lightweight, and further facilitates manufacturing of the individual semi-cured components.

Alternatively or additionally, the method can further comprise placing one or more reinforcing plies on the semi-cured component. Thus, stability of the semi-cured component can be increased, manufacturing tolerances can be compensated, and the box structure can be improved. If specifically more than one semi-cured component is used to form the box structure, the reinforcing ply/plies can be placed on the plurality of semi-cured components or on a portion thereof, in order to provide the box structure with a specific strength at specific (a) portion/s.

In another implementation variant, curing can comprise achieving a degree of cure of the resin matrix of 100% by applying a pressure and/or temperature on the at least one skin element and the semi-cured component curing the resin matrix completely. In other words, all elements forming the box structure are co-cured in a single curing step. Due to the semi-cured component/s the box structure is provided with sufficient stability, so that an interior mould can be omitted. Moreover, a caul plate can be used to place the skin element thereon, which allows easy demoulding.

For example, the curing may be performed in an autoclave and/or using a vacuum bag and/or an inner vacuum bag. An inner vacuum bag may be employed, where no semi-cured component is provided.

In yet another implementation variant, preforming can comprise preforming the laminate to a longitudinal component having an open cross-section. An open cross-section is to be understood as a non-continuous cross-section in the circumferential direction. For example, the cross-section may have an L-shape, U-shape, V-shape or the like, wherein one side of the longitudinal component is open. Such open cross-section allows simple tooling and demoulding, so that manufacturing of the component as well as manufacturing of the entire box structure is easier.

In a further implementation variant, the method can further comprise providing the cured composite box structure for final assembly of an aircraft. In other words, the composite box structure forms part of an aircraft. For instance, the box structure can be used as a movable or fixed aerodynamic element, such as a multispar box structure or a spar/stringer combination box.

Before final assembly of an aircraft, the composite box structure may be provided with fastening elements, such as flanges, bores, hinges, bolts or the like. If it is a fixed fastening element, such as a flange or bore or protruding bolt, such fixed fastening element can be manufactured during the curing cycle of the box structure. Thus, the fixed fastening element is a composite integral part of the box structure.

According to a second exemplary aspect for understanding the present disclosure, an aircraft can comprise a box structure produced by the method of the first exemplary aspect or any of its variants or combinations thereof.

The present disclosure is not restricted to the aspects and variants in the described form and order. Specifically, the description of aspects and variants is not to be understood as a specific limiting grouping of features. It is to be understood that the present disclosure also covers combinations of the aspects and variants not explicitly described. Thus, each variant or optional feature can be combined with any other aspect, variant, optional feature or even combinations thereof.

Preferred embodiments of the invention are now explained in greater detail with reference to the enclosed schematic drawings, in which
- Figure 1: schematically illustrates a perspective view of a moulded longitudinal component;
- Figure 2: schematically illustrates a cross section of an exemplary box structure;
- Figure 3: schematically illustrates a cross section of an exemplary box structure;
- Figure 4: illustrates an exemplary flow diagram of a method for manufacturing a box structure; and
- Figure 5: schematically illustrates an aircraft.

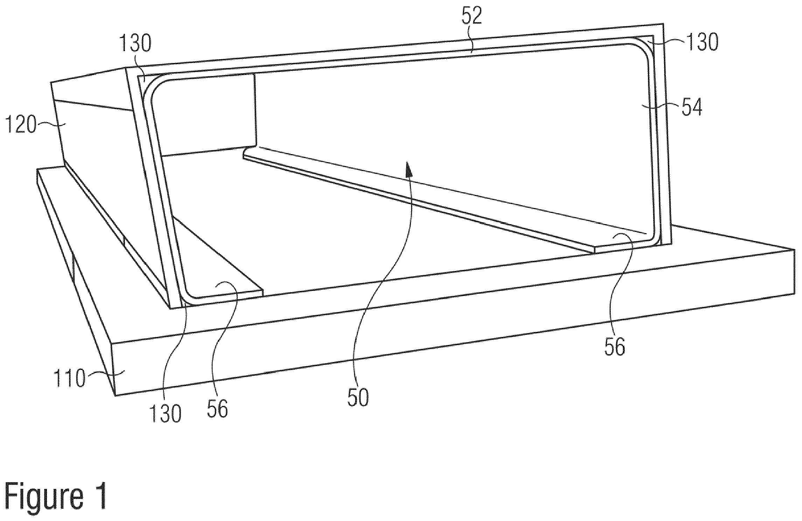

Figure 1 schematically illustrates a perspective view of a moulded longitudinal component 50. Only as an example, the component 50 is preformed by placing a laminate 52, 54, 56 inside of a female mould or tooling 120. The laminate or plurality of laminates can be bent, so that the component 50 has a first section 52 and two opposite sections 54 (which exemplary can be arranged perpendicularly to the first section 52). Thus, the component 50 may have an open cross-section, particularly a U-shaped cross-section. The illustrated component 50 additionally has two ends 56 of the open cross-section, which are bent at and relative to the second sections 54. Such ends 56 may allow contacting another component 50, for instance at its respective first section 52.

The mould may further comprise a plate 110, onto which the two ends 56 can be placed and formed. The female mould 120 may include or be provided with fillers 130, in order to achieve a desired radius of each bend, such as between first section 52 and second sections 54 and/or between second sections 54 and end 56. Such component 50 may be manufactured by placing an inflatable, soft or rigid interior mould (not illustrated for clarity purposes) or mandrel in the inner space of the component 50 and plate 110. The inflatable mould can be achieved by a vacuum bag.

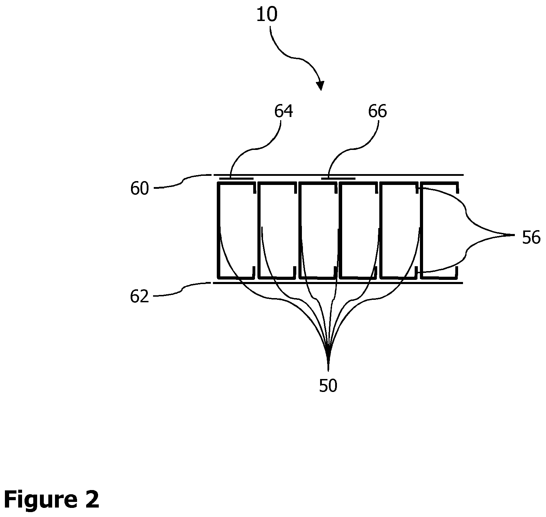

Figure 2 schematically illustrates a cross section of an exemplary box structure 10, which comprises a plurality of components 50, such as longitudinal component 50 illustrated in Figure 1. As an example only, the components 50 can contact one another at the two ends 56 of one component 50 and the first section 52 of the other component 50. It is to be understood that the cross-sectional shape of the component illustrated in Figures 1 and 2 is only one possible example. The component 50 may have any shape in the longitudinal direction as well as in cross-section, or even a varying shape, if required for the production of the box structure 10.

Each of the components 50 may be semi-cured, so that they provide sufficient rigidity for manufacturing the box structure 10, without requiring any internal tooling or mould.

The illustrated box structure 10 of Figure 2 further comprises optional reinforcing plies 64 and 66. For instance, a ply 64 may reinforce one component 50. Alternatively, a ply 66 may cover two or more components 50, so that adjacent components 50 can be reinforced. It is to be understood that the reinforcing plies 64, 66 illustrated in Figure 2 are only exemplary and may also be provided at the bottom side of the components 50.

Furthermore, box structure 10 can comprise a skin element 60, for example on its upper side. The skin element 60 can be a laminate covering one or more of the components 50 at a lateral side thereof. The skin element 60 can be a pre-preg or other composite material. Alternatively or additionally, box structure 10 can comprise a skin element 62 at its bottom side. This bottom skin element 62 is provided on a side 54 of the at least one component 50.

The box structure 10 can then be cured, so that an integral multispar box structure can be produced. During this curing an interlinking between the matrix of the skin element/s and the semi-cured components 50 take place. This leads to an integral composite structure 10.

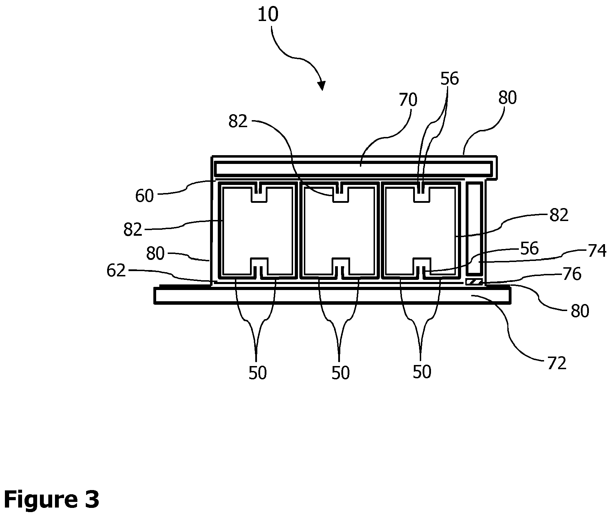

Figure 3 schematically illustrates a cross section of another exemplary box structure 10, which comprises a plurality of components 50, such as component 50 illustrated in Figure 1. In this example, the components 50 can contact one another at their respective two ends 56 of each component 50. Thus, a pair of components 50 forms a closed cross-sectional shape, while two pairs of such components 50 contact one another at their respective first section 52, if more than two components are used for the box structure 10. The outermost components 50 form a lateral side of the box structure 10 with their respective first section 52.

Each of the components 50 may be semi-cured, so that they provide sufficient rigidity for manufacturing the box structure 10, without requiring any internal tooling or mould.

The further details described with respect to the example illustrated in Figure 2 also apply to this example of box structure 10. The description thereof is omitted, in order to avoid repetitions.

Figure 3 further illustrates components used to form and cure the box structure 10. For instance, the uncured box structure 10 may be covered with a caul plate 70 to form the upper side of the box structure 10. Likewise, the box structure 10 can be placed on a bottom tool 72. In order to stabilise and form the sides of the box structure 10, particularly the outermost semi-cured components 50, one or more supports 74 can be used. Only one such support 74 is illustrated in Figure 3 for clarity reasons. It is to be understood that on the left-hand side in Figure 3 a similar support 74 can be used as well as the longitudinal ends of the components 50. Finally, to compensate for any height difference between the caul plate 70, the bottom tool 72 and/or the support(s), a corresponding height compensation element 76 could be placed therebetween.

Furthermore, for curing the block structure 10, an outer vacuum bag 80 can be placed over the entire assembly, particularly including caul plate 70, support 74, etc.. The outer vacuum bag 80 can be connected to the bottom tool 72 in an airtight manner, so that the air in the space between the vacuum bag 80 and the bottom tool 72 can be evacuated.

In addition, inner vacuum bags 82 can be employed inside of the longitudinal components 50, in the particular example of Figure 3 inside of a pair of longitudinal components 50. Such inner vacuum bags 82 allow sealing the space inside vacuum bag 80 with respect to the connecting parts of semi-cured components 50, particularly at their ends 56. Thus, when the space between vacuum bag 80 and bottom tool 72 is evacuated, the inner vacuum bags 82 will tightly fit to an inner surface of the semi-cured components 50. Optionally, the inner space of the vacuum bags 82 may be pressurised, so that vacuum bags 82 are pressed against the inner surface of the semi-cured components 50.

The box structure 10 can then be cured, for example by applying heat in addition to the vacuum in vacuum bag 80, so that an integral multispar box structure can be produced. During this curing an interlinking between the matrix of the skin element/s 60, 62 and the semi-cured components 50 take place. This leads to an integral composite structure 10.

It is to be understood that the details for forming and curing the box structure may be used for any of the examples described herein, and are not limited to the example illustrated in Figure 3.

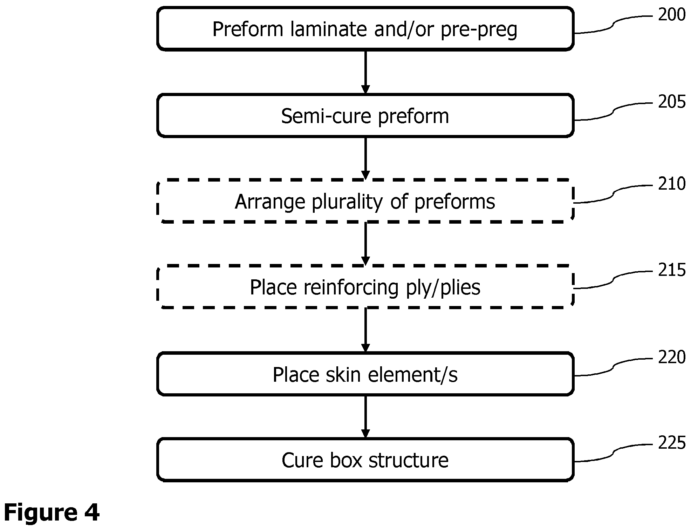

Figure 4 illustrates an exemplary flow diagram of a method for manufacturing a box structure 10. The method includes preforming a laminate and/or pre-preg provided with a resin matrix in step 200. For instance, the laminate and/or pre-preg can be preformed to a longitudinal component 50. In step 205 the preformed longitudinal component 50 is semi-cured. This can be performed in a mould 110, 120 as illustrated in Figure 1. During the semi-curing the resin matrix partially interlinks, achieving a certain degree of strength to the component 50. Semi-curing may be performed by a reduced curing cycle, such as at a lower curing temperature and/or for only a short duration, so that the resin matrix does not completely interlink.

In optional steps 210 and 215, the method may further comprise arranging a plurality of preforms, i.e. arranging a plurality of semi-cured components 50, and placing one or more reinforcing plies 64, 66 on the semi-cured component/s 50, respectively. Thus, a first part of a box structure 10 can be formed by arranging the plurality of preforms 50 and/or by placing reinforcing plies 64, 66.

Thereafter, in step 220, the method further includes placing at least one skin element 60, 62 on the semi-cured component 50. Optionally, any further components and elements to complete the box structure 10 may also be placed. These components and elements as well as the skin element 60, 62 can be a laminate, pre-preg or other resin matrix comprising component. In order to form the box structure 10, it may be placed on a mould, such as a caul plate, and further conventional techniques may be applied, such as providing a vacuum bag.

In step 225, the box structure 10 is cured, i.e. any semi-cured and non-cured matrix will be completely interlinked, in order to produce a composite box structure 10. The curing 225 may include placing the prepared box structure 10 in an autoclave or oven (not illustrated), apply a vacuum to any vacuum bag, apply pressure to the box structure 10, or the like.

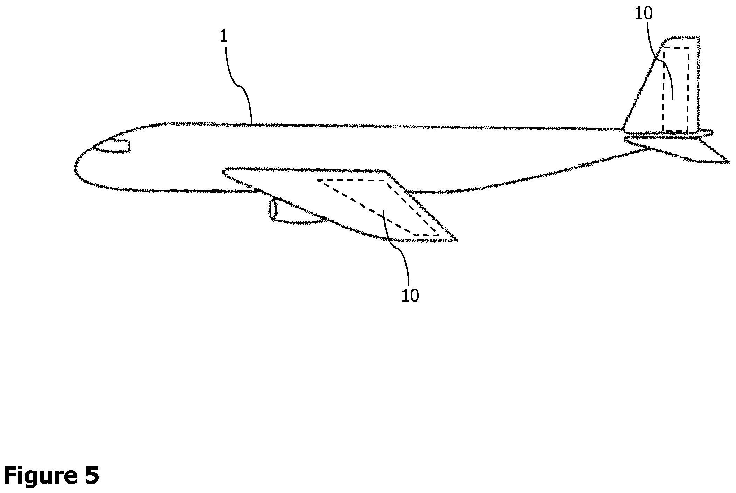

The cured composite box structure 10 can be provided for final assembly of an aircraft 1 as illustrated in Figure 5. For example, the box structure can be used as any movable or fixed portion of an airfoil. Only exemplarily Figure 5 shows a box structure 10 at a wing of the aircraft 1 and at a tailplane of the aircraft 1.

## Claims

1. A method of manufacturing a composite box structure (10), the method comprising:
preforming (200) a laminate (52 - 56) to a longitudinal component (50), wherein the laminate (52 - 56) is provided with a resin matrix;
semi-curing (205) the preformed longitudinal component (50);
placing (220) at least one skin element (60, 62) on the semi-cured component (50); and
curing (225) the at least one skin element (60, 62) and the semi-cured component (50) to manufacture the composite box structure (10).

2. The method according to claim 1, wherein semi-curing (205) comprises achieving a degree of cure of the resin matrix between 10% and 80%, preferably between 20% and 70%.

3. The method according to claim 1 or 2, wherein preforming (200) comprises placing the laminate (52 - 56) in a female tool (120) and/or placing the laminate (52 - 56) on a rigid mandrel and/or using an interior inflatable tool and/or using a vacuum bag.

4. The method according to one of claims 1 to 3, wherein preforming (200) comprises providing a filler (130) at a bend of the laminate (52 - 56).

5. The method according to one of claims 1 to 4, further comprising:
arranging (210) a plurality of semi-cured components (50) adjacent to one another, wherein at least one of the plurality of semi-cured components (50) contacts another one of the plurality of semi-cured components (50).

6. The method according to one of claims 1 to 5, further comprising:
placing (215) one or more reinforcing plies (64, 66) on the semi-cured component (50).

7. The method according to one of claims 1 to 6, wherein curing (225) comprises achieving a degree of cure of the resin matrix of 100% by applying a pressure and/or temperature on the at least one skin element (60, 62) and the semi-cured component (50) curing the resin matrix completely.

8. The method according to one of claims 1 to 7, wherein preforming comprises preforming the laminate (52 - 56) to a longitudinal component having an open cross-section.

9. The method according to claim 8 when dependent on claim 5, wherein arranging the plurality of semi-cured components (50) comprises arranging at least one pair of the semi-cured components (50) to contact one another at respective open ends (56) of the open cross-section, so that the pair of semi-cured components (50) has a closed cross-sectional shape, and
wherein, preferably, two of the pairs of the semi-cured components (50) contact one another at respective closed sections (52) of the open cross section.

10. The method according to claim 9, further comprising at least one of the following method steps:
providing an inner vacuum bag (82) inside of each of the at least one pair of semi-cured components (50), the inner vacuum bag (82) covering an inner surface of the closed cross-sectional shape of the plurality of semi-cured components (50),
placing the plurality of semi-cured components (50) and the at least one skin element (60, 62) on a bottom tool (72),
covering the plurality of semi-cured components (50) and the at least one skin element (60, 62) with a caul plate (70),
providing one or more supports (74) at one or both of the outermost semi-cured components(50) of the plurality of semi-cured components (50),
placing a height compensation element (76) between one of the supports (74) and the caul plate (70),
covering the plurality of semi-cured components (50) and the at least one skin element (60, 62), and preferably the caul plate (70), with an outer vacuum bag (80), and evacuating a space delimited by vacuum bag (80).

11. The method according to one of claims 1 to 10, further comprising:
providing the cured composite box structure (10) for final assembly of an aircraft (1).
